# EUROPÄISCHE PATENTSCHRIFT

(11) **EP 1 236 910 B1**
(45) Veröffentlichungstag und Bekanntmachung des Hinweises auf die Patenterteilung: **26.03.2008**
(21) Anmeldenummer: 02003701.6
(22) Anmeldetag: 19.02.2002
(51) Int. Cl.: F16B 19/10, E05C 5/02

(54) **Federbelasteter, rastender Druckstift**
Spring-loaded press pin
Bouton poussoir à ressort

(30) Priorität: 02.03.2001 DE 10110201
(43) Veröffentlichungstag der Anmeldung: 04.09.2002
(73) Patentinhaber: Otto Ganter GmbH & Co. KG Normteilefabrik, 78120 Furtwangen (DE)
(72) Erfinder: Kienzler, Rudolf, 78120 Furtwangen (DE)
(74) Vertreter: Riebling, Peter

(56) Entgegenhaltungen:
- DE-A- 19 702 426
- DE-U- 9 217 160

## Beschreibung

Die Erfindung betrifft einen federbelasteten, rastenden Druckstift nach dem Oberbegriff des Patentanspruchs 1.

Ein derartiger Druckstift ist beispielsweise mit der auf den gleichen Anmelder zurückgehenden DE 93 19 800 U1 bekannt geworden.

Der dort gezeigt Druckstift hat den Vorteil, dass er eine innenliegende Verrastung zwischen der Führungshülse und dem drehbar und federbelastet auf der Führungshülse drehbaren und verschiebbaren Knopf aufweist. Derartige verdeckte Rastungen haben den Vorteil, dass sie gegen äußere Schmutzeinwirkungen unempfindlich sind. Radial auswärts der dort gezeigte, verdeckten Verrastung ist der sich in axialer Richtung erstreckender Aufnahmeraum zwischen dem Knopf und der Führungshülse angeordnet. Damit besteht allerdings der Nachteil, dass der Außendurchmesser des Druckstiftes insgesamt sehr groß wird, weil die Verrastung und die Federanordnung in radialer Hintereinanderfolge angeordnet sind.

Das Dokument DE 9 217 160 U offenbart einen anderen Druckstift mit den Merkmalen des Oberbegriffs des Anspruchs 1.

Der Erfindung liegt deshalb die Aufgabe zugrunde, einen Druckstift der eingangs genannten Art so weiter zu bilden, dass er bei Beibehaltung der Vorteile einer verdeckten Verrastung einen geringeren Außendurchmesser aufweist.

Zur Lösung der gestellten Aufgabe ist die Erfindung durch die technische Lehre des Anspruches 1 gekennzeichnet.

Die erfindungsgemäßen Vorteile ergeben sich durch die Kombination der im Kennzeichen angegebenen drei Merkmale.

Mit dem ersten Merkmal wird die verdeckte Rastung beschrieben, die den Vorteil hat, dass eine mindestens teilweise in axialer Richtung nach unten offene Ringausnehmung im Knopf vorgesehen ist, wodurch sich eine besonders einfache Montage ergibt.

Das zweite Merkmal der Erfindung hat ebenfalls die leichte Montierbarkeit zum Ziel, weil die Druckfeder in einer nach unten offenen Bohrung der Führungshülse angeordnet ist und sich lediglich an einem entsprechenden, im Durchmesser erweiterten Absatz des innenliegenden Stiftes abstützt. Auch hierdurch wird die Montage wesentlich erleichtert.

Schließlich hat das letzte Merkmal den Vorteil, dass es die axiale Hintereinanderanordnung von verdeckter Verrastung und Federanordnung beschreibt, was insgesamt zu einen geringeren Außenumfang des Druckstiftes führt.

Es wird nun nicht mehr eine radiale Hintereinanderfolge von einer Innenlinienverrastung und einer außenliegenden Federanordnung - wie beim Stand der Technik - vorausgesetzt, sonder erfindungsgemäß sind diese beiden Funktionsmerkmale in axialer Richtung hintereinander oder untereinander liegend angeordnet, so dass der Druckstift in seiner axialen Länge zwar etwas länger wird als der bekannte Druckstift, in seiner Außenumfang aber wesentlich vermindert ist.

Neben des geringeren Außendurchmessers wird demzufolge auch eine leichte Montierbarkeit erreicht.

In einer bevorzugten Ausgestaltung der Erfindung ist vorgesehen, dass die im Knopf angeordneten Ringausnehmungen, zur Aufnahme der Rastzähne der Führungshülse von zwei Hülsenteilen des Knopfes gebildet werden. Diese Ringausnehmung kann deshalb sehr nahe an den Außenumfang des Knopfes verlegt werden, wodurch sich gute Haltekräfte für die Verrastung ergeben.

Das Äußere, die Verrastung abdeckende Hülsenteil kann deshalb besonders schmal ausgebildet werden.

Nach einer Weiterbildung ist vorgesehen, dass das innere und äußere Hülsenteil im Fußbereich des Knopfes über radiale Verbindungsstege an mindestens zwei am Umfang einander gegenüberliegenden Stelle miteinander verbunden sind.

Damit ergibt sich eine überlegene Stabilität des in der Regel aus Kunststoff hergestellten Knopfes, weil trotz der nahe an den Außenumfang hin verlegten Ringausnehmung für das Eingreifen der Rastzähne der Führungshülse eine ausgezeichnete Stabilität der Ringausnehmung gewährleistet wird. Durch die Ausbildung der Verbindungsstege im Fußbereich dieser Ringausnehmung ist diese Ringausnehmung - bei der Verwendung von zwei Rastzähnen - an zwei einander gegenüber stehenden Stelle durch entsprechende Verbindungsstege geschlossen, so dass der Verbindungssteg eine Verbindung zwischen dem äußeren und dem inneren Hülsenteil des Knopfes herstellt. Damit sind die beiden Hülsenteile gegen Verbiegung gesichert, die Ringausnehmung ist insgesamt mechanisch hoch belastbar und hält auch Biegemomente aus, wenn der Knopf im Winkel zu seiner Längsachse zu der darin eingreifenden Führungshülse verkantet betätigt wird.

Ein weiterer Vorteil ergibt sich durch die Hintereinanderanordnung von Verrastung und Federanordnung dadurch, dass nun aufgrund der separaten Anordnung der Feder - getrennt von der Rastvorrichtung - auch große federbelastete Hübe des Druckstiftes möglich sind.

Es kann also die axiale Länge der die Druckfeder aufnehmenden Kammer sehr lang gemacht werden, was mit dem Vorteil verbunden ist, dass der Druckstift insgesamt einen großen Hub aufweisen kann, weil auch bei großen Hüben eine stabile und gegen Verbiegung gesicherte Ringausnehmung im Knopf dank der Schaffung von Verbindungsstegen zwischen dem äußeren und dem inneren Hülsenteil geschaffen wird.

Eine besonders günstige Montierbarkeit ergibt sich durch die Tatsache, dass der innenliegende Stift einen axialen Ansatz aufweist, der mit einem wiederhakenartigen Befestigungsprofil ausgerüstet ist. Dieses Befestigungsprofil greift mit wiederhakenartigem Vorsprüngen in die Bohrungswand der Längsbohrung im Knopf ein.

Zur Montage wird deshalb einfach der in der Regel aus Kunststoff gefertigte Knopf mit seiner Längsbohrung auf die Stirnseite des Befestigungsprofils des Stiftes aufgesetzt und mit der Hand eingeschlagen, wodurch sich der Stift mit seinem Befestigungsprofil an den Innenwandungen der Bohrungswand im Knopf eingräbt und dort unlösbar mit diesem verbunden wird. Es bedarf also keiner Verbindungen mittels Sprengringen, wie sie beispielweise bei der älteren DE 93 19 800 U1 erforderlich waren.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Alle in den Unterlagen, einschließlich der Zusammenfassung, offenbarten Angaben und Merkmale, insbesondere die in den Zeichnungen dargestellte räumliche Ausbildung werden als erfindungswesentlich beansprucht, soweit sie einzeln oder in Kombination gegenüber dem Stand der Technik neu sind.

Im folgenden wird die Erfindung anhand von lediglich einen Ausführungsweg darstellenden Zeichnungen näher erläutert. Hierbei gehen aus den Zeichnungen und ihrer Beschreibung weitere erfindungswesentliche Merkmale und Vorteile der Erfindung hervor.

### Es zeigen:

- Figur 1:: Seitenansicht des Druckstiftes nach der Erfindung.
- Figur 2:: Schnitt gemäß der Linie A-A in Figur 1.
- Figur 3:: Schnitt gemäß der Linie B-B in Figur 1.

Der federbelastete Druckstift nach der Erfindung besteht im wesentlichen aus einem in der Regel aus Kunststoff bestehendem Knopf 1, der an seinem oberen Ende ein verdicktes Kopfteil 3 aufweist, welches am Außenumfang einen Randierungsring 2 trägt, um die Betätigung des Knopfes 1 in axialer Richtung und in Umfangsrichtung zu erleichtern.

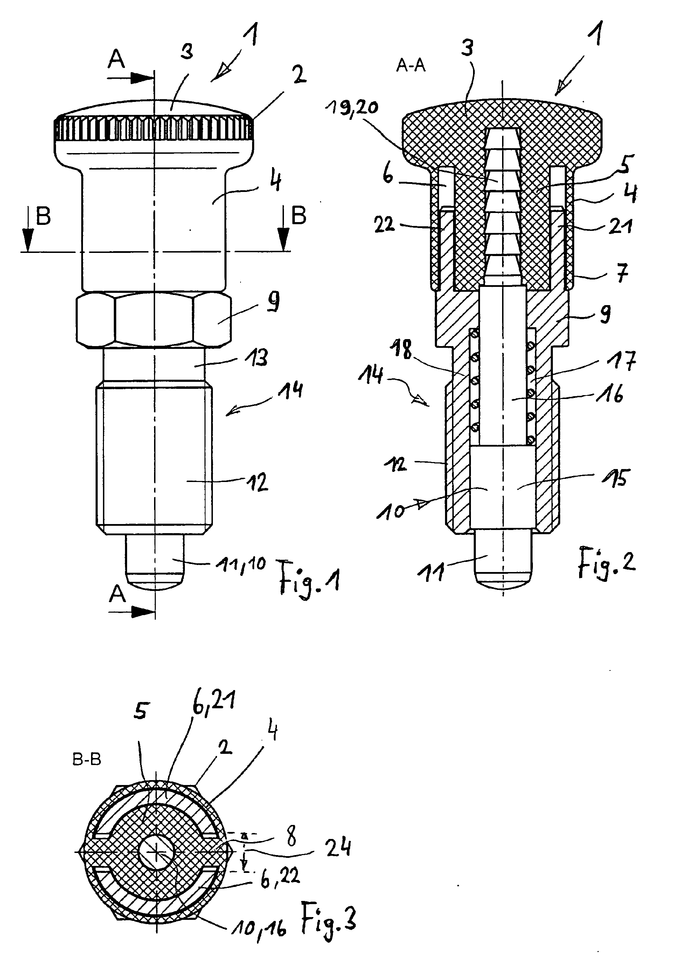

Der Knopf weist in seinem Innenraum zwei einander gegenüberliegende und spiegelbildlich zueinander ausgerichtete Ringausnehmungen 6 (siehe Figur3) auf, wobei die Wandung jeder Ringausnehmung 6 aus einer Wandung eines innenliegenden Hülsenteils 5 in Gegenüberstellung zu dem äußeren Hülsenteil 4 gebildet wird.

Die jeweilig Ringausnehmung 6 ist nach unten hin geöffnet, wobei lediglich an zwei einander gegenüber liegenden Bereichen (siehe Figur 3) die beiden Hülsenteile 4, 5 im Fußbereich 7 des Knopfes 1 durch Verbindungsstege 8 werkstoffeinstückig miteinander verbunden sind.

In die beiden einander gegenüberliegenden und etwa halbrund ausgebildeten Ringausnehmungen 6 greifen jeweils die entsprechend in der Formgebung angepassten Rastzähne 21, 22 ein, die am freien oberen Ende einer Führungshülse 14 angeformt sind.

Die Führungshülse 14 besteht bevorzugt aus einem Metallteil mit dem nach oben abragenden und einander gegenüberliegenden, etwa halbrund geformten Rastzähnen 21, 22, die mit geringem Spiel in Umfangsrichtung gemäß Figur 3 und 2 in die Ringausnehmung 6 eingreifen. Sie sind dort axial verschiebbar belagert.

Die Rastzähe 21, 22 sind in Umfangsrichtung durch zwei einander gegenüberliegende und in axialer Richtung sich erstreckende Nuten 24 voneinander getrennt. Unterhalb des Ansatzes der Rastzähne 21, 22 an den Körper der Führungshülse 14 ist ein Schlüsselansatz 9 an der Führungshülse 14 ausgebildet. Darunter schließt sich ein Bund 13 verringerter Durchmessers an, der als Freistellung für den sich darunter anschließenden Gewindeansatz 12 dient.

In der Führungshülse ist eine innere, axiale und einseitig offene Bohrung 17 ausgebildet, in die ein Stift 10 eingreift. Dieser weist an seinem unteren freien Ende ein Druckstück 11 auf, das beim Hochziehen des Knopfes 1 in der Bohrung 17 entgegen der Kraft der dort angeordneten Druckfeder 18 verschwindet.

Die Feder 18 stützt sich hierbei an einen oberen, inneren Ansatz der Bohrung 17 an und andererseits auf einem zugeordneten Absatz des Ansatzes 15 des Stiftes 10.

An den sich durch die Führungshülse 14 erstreckenden Stift 16 schließt sich ein mit wiederhakenartigen Ansätzen versehenes Befestigungsprofil 19 an.

Dieses Befestigungsprofil 19 ist in die Längsbohrung 20 des Knopfes 1 eingeschlagen und dort verankert.

Zur Montage wird deshalb die gesamte Anordnung gemäß Figur 2 auf eine Fläche aufgesetzt, so dass das Druckstück 11 die Fläche berührt und auf den nach oben offenen freien Stift 16 mit dem Befestigungsprofil 19 wird der Knopf 1 aufgesetzt, so dass die Längsbohrung 20 in Gegenüberstellung zu dem Befestigungsprofil 19 kommt.

Mit einem kurzen Schlag wird dann der Knopf 1 nach unten verschoben, so dass sich das Befestigungsprofil 19 in die Wandungen der Längsbohrung 20 eingräbt. Der Knopf 1 ist dann unlösbar mit dem Stift 10 verbunden.

Zur Herstellung der verrasteten, zurückgezogenen Stellung des Druckstückes 11 wird der Knopf 1 entgegen der Führungshülse 14 und entgegen der Federkraft der Druckfeder 18 nach oben gezogen, so dass die Rastzähne 21, 22 außer Eingriff mit den zugeordneten Ringausnehmungen 6 im Knopf 1 gelangen.

Der Knopf 1 kann dann in Umfangsrichtung verdreht werden, so dass die obere Fläche der Rastzähne 21, 22 an der unteren Stirnseite der Verbindungsstege zur Anlage kommen. Es wird damit die zurückgezogene , verrastete Funktionsstellung des Knopfes 1 definiert.

Zur Wiederherstellung der in Figur 2 dargestellten Grundstellung wird der Knopf 1 wiederum entgegen dem Hülsenteil 14 verdreht, so dass die Rastzähne 21, 22 wiederum in Eingriff mit den Ringausnehmungen 6 gelangen und unter der Kraft der Druckfeder 18 in die in Figur 2 und 3 dargestellte Eingriffstellung gelangen.

Vorteil der Anordnung ist, das die Bohrung 17 eine relativ große axiale Länge aufweisen kann, so dass der Knopf 1 um einen großen Hub verschoben werden kann, wobei selbstverständlich auch dementsprechend die axiale Länge der Ringausnehmungen 6 angepasst werden muss.

Trotz des großen Hubes ergibt sich einstabiler Aufbau des Knopfes 1 dadurch, dass das äußere und innere Hülsenteil 4, 5 durch die vorher erwähnten, einander gegenüberliegenden Verbindungsstege 8 miteinander verbinden sind.

### Zeichnungslegende

- 1: Knopf
- 2: Randrierungsring
- 3: Kopfteil
- 4: äußeres Hülsenteil
- 5: inneres Hülsenteil
- 6: Ringausnehmung
- 7: Fußbereich
- 8: Verbindungssteg
- 9: Schlüsselansatz
- 10: Stift
- 11: Druckstück
- 12: Gewindeansatz
- 13: Bund
- 14: Führungshülse
- 15: Ansatz
- 16: Stift
- 17: Bohrung
- 18: Druckfeder
- 19: Befestigungsprofil
- 20: Längsbohrung (Knopr1)
- 21: Rastzahn
- 22: Rastzahn
- 24: Nut

## Patentansprüche

1. Federbelasteter, rastender Druckstift mit einem Stift (10), der axial eine Führungshülse (14) durchgreift und an seinen oberen Ende mit einem Knopf (1) verbunden ist, wobei eine verdeckte Verrastung zwischen dem Knopf (1) und der Führungshülse (14) ausgebildet ist, **dadurch gekennzeichnet, dass** die Verrastung aus einer im Knopf (1) angeordneten, und mindestens teilweise in axialer Richtung nach unten offenen Ringausnehmung (6) besteht, in welche die Führungshülse (14) mit mindestens zwei einander gegenüberliegenden und zwischen sich eine axiale Nut (24) ausbildenden Rastzähnen (21, 22) federbelastet eingreift, dass die Aufnahme für die Druckfeder (18) in einer nach unten offenen Bohrung (17) in der Führungshülse (14) ausgebildet ist und dass diese Bohrung (17) in axialer Richtung unterhalb der Rasteinrichtung (6, 14, 21, 22) am Druckstift (1, 10, 14) angeordnet ist.

2. Druckstift nach Anspruch 1, **dadurch gekennzeichnet, dass** die spiegelbildlich zur Mittenquerachse ausgebildeten beiden Ringausnehmungen (6) radial nach außen von dem äußeren Hülsenteil (4) und radial einwärts von dem inneren Hülsenteil (5) des Knopfes (1) sind.

3. Druckstift nach Anspruch 1 oder 2, **dadurch gekennzeichnet, dass** die inneren und äußeren Hülsenteile (4, 5) des Knopfes (1) in dessen Fußbereich (7) über radiale Verbindungsstege (8) miteinander verbunden sind.

4. Druckstift nach einem der Ansprüche 1 bis 3, **dadurch gekennzeichnet, dass** der Stift (10) ein Befestigungsprofil (19) aufweist, das mit widerhakenartigen Vorsprüngen in die Bohrungswand der Längsbohrung (20) im Knopf (1) eingegraben ist.

## Claims

1. Spring-loaded, latching press pin, comprising a pin (10) which passes axially through a guide sleeve (14) and is connected to a knob (1) at its top end, a concealed latching means being formed between the knob (1) and the guide sleeve (14), **characterized in that** the latching means consists of an annular recess (6) which is arranged in the knob (1) and is at least partly open at the bottom in the axial direction and in which the guide sleeve (14) engages in a spring-loaded manner by means of at least two opposite latching teeth (21, 22) forming an axial groove (24) between them, **in that** the receptacle for the compression spring (18) is formed in a bore (17), open at the bottom, in the guide sleeve (14), and **in that** this bore (17) is arranged in the axial direction below the latching device (6, 14, 21, 22) on the press pin (1, 10, 14).

2. Press pin according to Claim 1, **characterized in that** the two annular recesses (6), formed in mirror image relative to the centre transverse axis, are radially outwards from the inner sleeve part (4) and radially inwards from the outer sleeve part (5) of the knob (1).

3. Press pin according to Claim 1 or 2, **characterized in that** the inner and outer sleeve parts (4, 5) of the knob (1) are connected to one another in its foot region (7) via radial connecting webs (8).

4. Press pin according to one of Claims 1 to 3, **characterized in that** the pin (10) has a fastening profile (19) which is dug into the bore wall of the longitudinal bore (20) in the knob (1) by means of barb-like projections.

## Revendications

1. Bouton-poussoir chargé par ressort et à enclenchement, comprenant une tige (10) qui traverse axialement une douille de guidage (14) et qui est reliée à son extrémité supérieure avec un bouton (1), dans lequel un enclenchement dissimulé est réalisé entre le bouton (1) et la douille de guidage (14), **caractérisé en ce que** l'enclenchement est formé par un évidement annulaire (6) agencé dans le bouton (1) et ouvert au moins partiellement vers le bas en direction axiale, dans lequel s'engage la douille de guidage (14) avec au moins deux dents d'enclenchement (21, 22) mutuellement opposées et formant entre elles une gorge axiale (24), sous la charge d'un ressort, **en ce que** le logement pour le ressort de compression (18) est réalisé dans un perçage (17) ouvert vers le bas dans la douille de guidage (14), et **en ce que** ce perçage (17) est agencé sur le bouton-poussoir (1, 10, 14) en direction axiale au-dessous du dispositif à enclenchement (6, 14, 21, 22).

2. Bouton-poussoir selon la revendication 1, **caractérisé en ce que** les deux évidements annulaires (6), réalisés symétriquement par rapport à l'axe transversal médian, se trouvent radialement vers l'extérieur depuis la partie de douille extérieure (4) et radialement vers l'intérieur depuis la partie de douille intérieure (5) du bouton (1).

3. Bouton-poussoir selon la revendication 1 ou 2, **caractérisé en ce que** les parties de douille intérieure et extérieure (4, 5) du bouton (1) sont reliées l'une à l'autre via des barrettes de liaison radiales (8) dans la région de pied (7) du bouton.

4. Bouton-poussoir selon l'une des revendications 1 à 3, **caractérisé en ce que** la tige (10) présente un profil de fixation (19) qui est enfoncé dans le bouton (1) par des saillies analogues à des ardillons, dans la paroi du perçage longitudinal (20).
